# EUROPEAN PATENT SPECIFICATION

(11) **EP 2 966 334 B1**
(45) Date of publication and mention of the grant of the patent: **05.09.2018**
(21) Application number: 14176448.0
(22) Date of filing: 10.07.2014
(51) Int. Cl.: F16L 53/00, H05B 3/58

(54) **Heated flow line for a fluid-feeding system in a motor vehicle**
Beheiztes Leitungsrohr für Flüssigkeitszuführungssystem in einem Kraftfahrzeug
Conduite d'écoulement chauffée destinée à un système d'alimentation en liquide dans un véhicule à moteur

(43) Date of publication of application: 13.01.2016
(73) Proprietor: Littelfuse Italy S.r.l., 20122 Milano (IT)
(72) Inventor: Salvatore, Osvaldo, 20122 Milano (IT)
(74) Representative: Frontoni, Stefano

(56) References cited:
- EP-A1- 0 306 638
- DE-A1- 2 707 244
- US-A- 4 038 519
- US-B1- 6 392 209

## Description

The present invention relates to a heated flow line for a fluid-feeding system of a motor vehicle, of the type comprising:
- a pipe made of plastic material with positive temperature coefficient; and
- at least one first electric wire and one second electric wire electrically associated to said pipe in such a way as to generate, when subjected to a difference of electric potential, an electric current within said pipe, in a part thereof without said electric wires, according to a direction from said first wire to said second wire, or vice versa.

A solution of the above type is, for example, described in the patent document No. WO2006/097765 A1. In the flow line described in this document, the electric wires are incorporated in the pipe made of plastic material. For this purpose, the flow line is obtained via a process that envisages forming the pipe by extrusion directly on the electric wires so as to englobe the latter within the material forming the pipe.

The drawbacks linked to this type of solution are numerous. It is first of all subject to the risk of the electric wires surfacing on the inside of the pipe, with the consequence of contaminating the fluid conveyed and of subjecting the electric wires to a rapid deterioration. This possibility can be prevented only by using a greater amount of material, this, however, considerably increasing the costs of production given the particular type of material, represented by plastic materials with positive temperature coefficient.

Furthermore, this known solution presents an increased risk of failure in the plastic/electric-wire interface, this limiting the possible applications, above all those where steps are envisaged in which the duct must undergo deformation, for example cold expansion, to be fitted on the connectors of the fluid-feed circuits.

Finally, in the known solution in question, once the pipe has been formed, the electric wires are already arranged thereon according to a definitive configuration that can no longer be changed, this complicating enormously management of production processes and warehousing. EP 0 306 638 A1 discloses a heated flow line for a fluid-feeding system of a motor vehicle.

US4038519 discloses a transparent flexible heating tube which has at least one helical heating conductor and at least one helical temperature measuring probe embedded in its wall. As shown in the document, eight helical heating conductors 2 are wound on a pipe 1 surrounded by a sheath 3. One of the conductors 2 may additionally act as the temperature probe and one may act as an earthing element. The conductor can be a metal wire or carbon filament. In Fig. 4, a nickel tape resistor 4 is helically wound on pipe 1, and a filamentary temperature probe 5 is helically embedded in pipe 1. The tube is preferably made by forming the pipe 1 or a temporary tubular mandrel, helically winding under appropriate tensions the resistor and probe about the pipe 1, covering the pipe with a sleeve 3, vulcanizing the pipe and removing the mandrel. The mandrel may be loosened by stretching or it may be heat shrunk during vulcanization. Two serially connected helically wound pipes may be enclosed in a single sheath. The pipe 1 is made of p.v.c., polyurethane or silicone elastomers. The sleeve 3 may be formed by shrinking on a sheath of P.T.F.E. or by immersing in polymer solution. A lacquer of silicone elastomer may be applied to the inside and outside of the tubular heater. Blood, water or gas may be heated in the tubular heater. The probe is connected to a measuring bridge.

DE2707244 discloses an electric heater or evaporator for liqs. which comprises a liq.-conveying pipeline surrounded by an electric heater with resistance heating wire. The pipeline is of elastic, highly heat-stable, non-conductive, plastics in which the heating wire is embedded. The heater has a broad range of applications and can be mass-produced. Its application can be readily adjusted to special requirements.

The object of the present invention is to provide a heated flow line that will be improved as compared to the known solution referred to above.

The above object is achieved via a heated flow line presenting the characteristics specified in the claims.

The claims form an integral part of the technical teaching provided herein in relation to the invention.

Further characteristics and advantages of the invention will emerge clearly from the ensuing description with reference to the annexed drawings, which are provided purely by way of non-limiting example and in which:
- Figure 1 is a schematic cross-sectional view of an embodiment of the heated flow line described herein; and
- Figure 2 is a perspective view of the flow line of Figure 1.

As mentioned previously, the present invention regards a heated flow line that is to be used in a fluid-feeding system of a motor vehicle. In particular, the line in question is preferably to be used as pipe for delivery of solutions of urea (as the solution marketed under the commercial name ADBLUE®) in systems for catalytic selective reduction of NOx emissions. The possible applications of this line are in any case innumerable and by way of example there may be cited its use as: a pipe for delivery of diesel or other fuels, a pipe for delivery of water to the windscreen wipers, a pipe for fast heating of the air of the passenger compartment, etc.

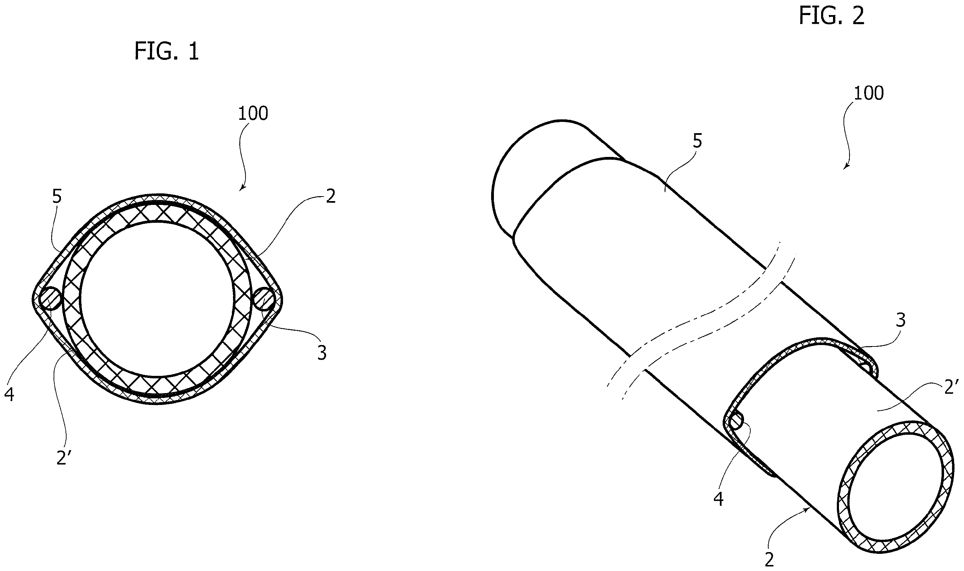

With reference to Figure 1, the line in question, designated in the figures by the reference number 100, comprises a pipe 2 made of plastic material with positive temperature coefficient, and at least one first electric wire 3 and one second electric wire 4 associated to the pipe 2. As is known in the prior art for solutions of the type in question, the wires 3 and 4 have the function, once they are connected to a difference of electric potential, of carrying the aforesaid difference of potential along the pipe 2 and generating an electric current within the pipe directed from one wire to the other.

The material with positive temperature coefficient constituting the pipe 2 enables this to operate, when traversed by the current, as element for heating the fluid. Furthermore, thanks to the well-known properties of this material, the pipe 2 has a capacity of self-regulation, as heating element, in the sense that its electrical resistance, and hence its heating capacity, substantially decreases above a given temperature threshold, and it is thus capable of self-regulation on a given thermal state. In various preferred embodiments, the pipe 2 is made of polyamide, in particular polyamide 12. It is clearly possible to envisage use also of other materials, this according also to the type of fluid to be conveyed; in particular, the chemical resistance to the fluid is one of the criteria for selection of the type of material.

The heated flow line described herein is characterized in that the two wires 3 and 4 are arranged on the outer surface 2' of the pipe 2 and moreover in that it comprises a sheath 5 that coats at least part of the outer surface of the pipe and presses the wires 3 and 4 against the aforesaid surface. In preferred embodiments, the sheath is made of heat-shrinkable material, preferably polyethylene or else PVC, and is applied via a heat-shrinking process on the outer surface of the pipe 2 on which the wires 3 and 4 have previously been arranged.

The type of coupling thus obtained, between the pipe 2 and the electric wires 3 and 4, in the first place secures the two wires in a reliable way to the pipe and guarantees an adequate electrical connection between them. In fact, the electric wires are subjected to a considerable force of compression by the sheath, which ensures a good surface of electrical contact with the pipe.

At the same time, this coupling in any case enables the two wires to slide with respect to the outer surface of the pipe, for example under the effect of given external conditions, as in the case where the pipe is deformed by bending, or else as in the case of thermal jumps (in this regard, considering the fact that the electric wires have a coefficient of thermal expansion considerably lower than the pipe made of polyamide). In fact, the forces of friction that act in the longitudinal direction between the electric wires and the pipe are limited thanks precisely to the fact that the surface of contact between the pipe and these wires is less than the entire development of the outer surface of the wires.

This means that the pipe 2 and the electric wires 3, 4 can react in these conditions substantially according to their normal mechanical behaviour, which renders the overall structure of the line 100 capable of absorbing in an optimal way the deformations and variations of geometry and/or size.

In the known art discussed above, instead, as has been seen, the electric wires are entirely englobed in the pipe made of polyamide and intimately connected to this so that in the aforesaid conditions these elements appreciably interfere with one another, rendering the structure globally more frail.

In the light of the foregoing it is thus clear that, as compared to the known art, the flow line described herein is capable of operating in a wider range of conditions of use and is hence more versatile - since it can, for example, be freely bent and deformed according to the specific requirements s of the various applications and it can in general withstand more burdensome conditions of use. In various embodiments, the heat-shrinkable sheath can be provided with an internal coating layer having properties of sealant in order to prevent entry of water between the sheath and the pipe and protect the connection of the electric wires to the corresponding connectors.

In various embodiments, as in the one illustrated, the wires 3 and 4 extend parallel to the geometrical axis of the pipe 2, setting themselves from one another at a distance, defined on the outer perimeter of the cross section of the pipe, that may vary according to the desired mode of heating for the line 100. Furthermore, once again according to the desired mode of heating, the electric wires may number more than two, and each wire may be obtained as unipolar wire or else as twisted multi-wire. Preferably, the electric wires are made of copper. Alternatively, the electric wires may be obtained directly on the pipe via a process of electrolytic deposition. In this connection, it should be noted that by the term "wire" is meant, in this case, generically an elongated electrical conductor of any cross section and thickness.

In various preferred embodiments, as in the one illustrated (see Figure 2), the electric wires 3 and 4 do not reach the opposite ends of the pipe 2 so that the latter has, at its ends, portions completely free from the wires 3, 4 that are to be connected to the connectors of the feed system in which the line is inserted. Since the portions in question are without the wires 3 and 4, they are on the one hand easy to mount on the aforesaid connectors, which, as may be noted, have seal rings that are to engage the outer surface of the pipe, and, on the other hand, are stronger from the mechanical standpoint so that they are able to guarantee a firm connection over time (with their presence the wires would in fact cause in any case a discontinuity of mechanical characteristics where all the stresses would be concentrated).

Possibly, the line 100 can also comprise a further layer set around the sheath 5, designed to insulate thermally the heated pipe from outside. However, the present applicant has found that the line 100 described herein is able to perform its heating function in an optimal way even in the absence of such a layer.

The process for providing the flow line 100 described herein comprises the steps of:
- forming the pipe 2 via an extrusion process;
- arranging the electric wires 3 and 4 on the outer surface of the pipe 2;
- applying the sheath 5 on the ensemble constituted by the pipe 2 and the electric wires 3 and 4; and
- subjecting the above sheath to a heat-shrinking process in such a way that this comes to squeeze the pipe 2 so as to press the electric wires 3 and 4 against the outer surface of the pipe.

It should be noted that to keep the wires 3 and 4 in position on the pipe 2 before the sheath 5 is applied, the process may envisage the use of provisional stops, to be removed at the end of the process or possibly also such as to remain on the end product.

The extrusion process and the heat-shrinking process indicated above are not described herein in detail in so far as they can be carried out according to the modalities already known in the art.

Finally, in the light of the foregoing, it should be noted that the final configuration of the flow line described herein can be modified in a simple and fast way, according to the specific requirements of application, by simply varying the number, type, arrangement, and length of the electric wires, before the heat-shrinkable sheath 5 is applied on the pipe 2.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A heated flow line for a fluid-feeding system of a motor vehicle,
comprising:
- a pipe (2) made of plastic material with positive temperature coefficient; and
- at least one first electric wire (3) and one second electric wire (4) electrically associated to said pipe (2) in such a way as to generate, when subjected to a difference of electric potential, an electric current within said pipe, in a part thereof without said electric wires, according to a direction from said first wire to said second wire, or vice versa,
said line being **characterized in that** said first and second wires (3, 4) are arranged on the outer surface (2') of said pipe (2) and **in that** it comprises a sheath (5) that covers at least part of said outer surface and presses said first and second wires (3, 4) against said surface.

2. The flow line according to Claim 1, wherein said sheath (5) is made of heat-shrinkable material and is applied to said pipe via a heat-shrinking process.

3. The flow line according to any one of the preceding claims, wherein said wires (3, 4) extend parallel to the geometrical axis of said pipe (2).

4. The flow line according to any one of the preceding claims, wherein said electric wires (3, 4) do not reach the opposite ends of said pipe (2) so that this has, at said ends, portions completely free from said wires (3, 4).

5. The flow line according to any one of the preceding claims, wherein said plastic material is polyamide 12.

## Patentansprüche

1. Beheizte Durchflussleitung für ein Fluidzuführsystem eines Kraftfahrzeugs,
mit:
- einem Rohr (2) aus Kunststoffmaterial mit positivem Temperaturkoeffizienten; und
- mindestens einem ersten elektrischen Draht (3) und einem zweiten elektrischen Draht (4), die elektrisch mit dem Rohr (2) derart zugeordnet sind, dass im Rohr, in einem Teil davon ohne die elektrischen Drähte, ein elektrischer Strom in eine Richtung von dem ersten Draht zu dem zweiten oder umgekehrt erzeugt wird, wenn es einer elektrischen Potenzialdifferenz ausgesetzt ist,
wobei die Leitung **dadurch gekennzeichnet ist, dass** der erste und der zweite Draht (3, 4) an der Außenfläche (2') des Rohrs (2) angeordnet sind, und sie eine Hülle (5) aufweist, die zumindest einen Teil der Außenfläche bedeckt und den ersten und zweiten Draht (3, 4) gegen die Fläche drückt.

2. Durchflussleitung nach Anspruch 1, wobei die Hülle (5) aus Warmschrumpfmaterial besteht und in einem Warmschrumpfprozess auf das Rohr aufgebracht ist.

3. Durchflussleitung nach einem der vorhergehenden Ansprüche, wobei sich die Drähte (3, 4) parallel zur geometrischen Achse des Rohrs (2) erstrecken.

4. Durchflussleitung nach einem der vorhergehenden Ansprüche, wobei die elektrischen Drähte (3, 4) die entgegengesetzten Enden des Rohrs (2) nicht erreichen, so dass dieses an den Enden Abschnitte aufweist, die vollständig frei von den Drähten (3, 4) sind.

5. Durchflussleitung nach einem der vorhergehenden Ansprüche, wobei es sich bei dem Kunststoffmaterial um Polyamid 12 handelt.

## Revendications

1. Conduite d'écoulement chauffée pour un système d'alimentation en liquide dans un véhicule automobile,
comprenant :
- un tuyau (2) réalisé en une matière plastique ayant un coefficient de température positif ; et
- au moins un premier fil électrique (3) et un deuxième fil électrique (4) associés électriquement audit tuyau (2) de sorte à générer, lorsqu'ils sont soumis à une différence de potentiel électrique, un courant électrique à l'intérieur dudit tuyau, dans une partie de celui-ci dépourvue desdits fils électriques, selon une direction à partir dudit premier fil vers ledit deuxième fil, ou inversement,
ladite conduite étant **caractérisée en ce que** lesdits premier et deuxième fils (3, 4) sont agencés sur la surface externe (2') dudit tuyau (2) et **en ce qu'**elle comprend une gaine (5) qui couvre au moins une partie de ladite surface externe et presse lesdits premier et deuxième fils (3, 4) contre ladite surface.

2. Conduite d'écoulement selon la revendication 1, dans laquelle ladite gaine (5) est réalisée en un matériau thermorétractable et est appliquée audit tuyau par l'intermédiaire d'un procédé de thermorétraction.

3. Conduite d'écoulement selon l'une quelconque des revendications précédentes, dans laquelle lesdits fils (3, 4) s'étendent parallèlement à l'axe géométrique dudit tuyau (2).

4. Conduite d'écoulement selon l'une quelconque des revendications précédentes, dans laquelle lesdits fils électriques (3, 4) n'atteignent pas les extrémités opposées dudit tuyau (2) de sorte que celui-ci ait, auxdites extrémités, des parties entièrement exemptes desdits fils (3, 4).

5. Conduite d'écoulement selon l'une quelconque des revendications précédentes, dans laquelle ladite matière plastique est le polyamide 12.
